# EUROPEAN PATENT SPECIFICATION

(11) **EP 1 894 210 B1**
(45) Date of publication and mention of the grant of the patent: **29.07.2009**
(21) Application number: 06772129.0
(22) Date of filing: 05.06.2006
(51) Int. Cl.: H01B 1/00, C08K 7/00

(54) **THERMOPLASTIC LONG FIBER COMPOSITES, METHODS OF MANUFACTURE THEREOF AND ARTICLES DERIVED THEREFROM**
THERMOPLASTISCHE LANGFASERZUSAMMENSETZUNGEN, HERSTELLUNGSVERFAHREN DAFÜR UND DARAUS ENTWICKELTE ARTIKEL
COMPOSITES THERMOPLASTIQUES À FIBRES LONGUES, LEUR PROCÉDÉS DE FABRICATION ET ARTICLES DÉRIVÉS DE CES COMPOSITES

(30) Priority: 10.06.2005 US 689475 P; 06.04.2006 US 278863
(43) Date of publication of application: 05.03.2008
(73) Proprietor: Sabic Innovative Plastics IP B.V., 4612 PX Bergen op Zoom (NL)
(72) Inventor: ATKINSON, Paul, M., Columbus, IN 47203 (US)
(74) Representative: Gesthuysen, von Rohr & Eggert
(86) International application number: PCT/US2006/021709
(87) International publication number: WO 2006/135597

(56) References cited:
- EP-A- 0 387 419
- EP-A- 0 456 471
- US-A- 5 248 553
- US-A1- 2002 183 438
- US-A1- 2003 181 568

## Description

### CROSS REFERENCE TO RELATED APPLICATIONS

This application claims priority to U.S. Provisional Application No. 60/689,475, which was filed June 10, 2005, which application is hereby incorporated by reference in its entirety.

### FIELD OF THE INVENTION

The present invention is directed to thermoplastic long fiber composites, methods of manufacture thereof and articles derived therefrom.

### BACKGROUND OF THE INVENTION

Long fiber composites differ from other composites in that the fiber reinforcement has a substantially larger aspect ratio than the fiber reinforcement used in the other composites. The aspect ratio is defined as the ratio of the length to the diameter of the fiber. Long fiber composites generally employ glass long fibers disposed in a thermoplastic polymer. Long fiber composites can be manufactured in several ways, one of which is known as pultrusion. Pultruded long fiber composites are used to manufacture a variety of articles for automobiles, electronics, computers, or the like.

Thermoplastic materials and glass fibers are generally electrically insulating in nature and hence are not useful in applications where electrostatic dissipation or electromagnetic shielding is required. Pultruded long fiber composites that use glass fibers therefore cannot be used in applications where electrical conductivity is desired. It is therefore desirable to manufacture long fiber composites that are electrically conducting and can be used in applications where electrostatic dissipation is desirable.

### SUMMARY OF THE INVENTION

Disclosed herein is an electrically conducting long fiber composite including a thermoplastic resin; carbon long fibers; and glass long fibers; wherein the carbon long fibers and the glass long fibers have a length of greater then or equal to about 2 millimeters and wherein the electrically conducting long fiber composite upon being molded into an article displays a surface resistivity of less than or equal to about 10⁸ ohm per square centimeter and a notched Izod impact strength of greater than or equal to about 10 kilojoules per square meter.

Also disclosed herein is a method of manufacturing an electrically conducting long fiber composite including the step of blending a carbon long fiber composite with a glass long fiber composite to produce an electrically conducting long fiber composite; wherein the carbon long fiber composite includes carbon long fibers having a length of greater than or equal to about 2 millimeters disposed in a first thermoplastic resin; and wherein the glass long fiber composite includes glass long fibers having a length of greater than or equal to about 2 millimeters disposed in a second thermoplastic resin.

Disclosed herein as well is a method of manufacturing an electrically conducting long fiber including the steps of pultruding a first roving having carbon fibers through a first impregnation bath having a first molten thermoplastic polymer; impregnating the carbon fibers with the first molten thermoplastic polymer to produce a carbon long fiber composite; pultruding a second roving having glass fibers through a second impregnation bath having a second molten thermoplastic polymer; impregnating the glass fibers with the second molten thermoplastic polymer to produce a glass long fiber composite; and molding the carbon long fiber composite and the glass long fiber composite to form an electrically conducting long fiber composite.

Lastly, disclosed herein is a method of manufacturing an electrically conducting composite including the steps of pultruding a roving having carbon fibers and glass fibers through an impregnation bath having a molten thermoplastic polymer; impregnating the carbon fibers and the glass fibers with the molten thermoplastic polymer to produce an electrically conducting long fiber composites; and molding the electrically conducting long fiber composite to form an article, wherein the article has a surface resistivity of less than or equal to about 10⁸ ohm per square centimeter and a notched Izod impact strength of greater than or equal to about 15 kilojoules per square meter.

### DETAILED DESCRIPTION OF THE INVENTION

The present invention is more particularly described in the following description and examples that are intended to be illustrative only since numerous modifications and variations therein will be apparent to those skilled in the art. As used in the specification and in the claims, the singular form "a," "an," and "the" may include plural referents unless the context clearly dictates otherwise. Also, as used in the specification and in the claims, the term "comprising" may include the embodiments "consisting of" and "consisting essentially of." Furthermore, all ranges disclosed herein are inclusive of the endpoints and are independently combinable.

As used herein; approximating language may be applied to modify any quantitative representation that may vary without resulting in a change in the basic function to which it is related. Accordingly, a value modified by a term or terms, such as "about" and "substantially," may not to be limited to the precise value specified, in some cases. In at least some instances, the approximating language may correspond to the precision of an instrument for measuring the value.

Disclosed herein are electrically conducting long fiber composites that may be used in applications where electrostatic dissipation and/or electromagnetic shielding are desirable. The electrically conducting long fiber composites include a thermoplastic polymer, glass fibers and carbon fibers. Both the glass fibers and the carbon fibers in the composite are long fibers, i.e., they have a length of about 2 to about 50 millimeters. A process involving pultrusion is generally used to manufacture the electrically conducting long fiber composites. The ability to electrostatically dissipate an electronic charge permits articles manufactured from these composites to be electrostatically painted.

The thermoplastic polymer used in the long fiber composites is electrically insulating. The thermoplastic polymer may be any electrically insulating material including, but not limited to, an oligomer, a polymer, a copolymer, a block copolymer, a random copolymer, an alternating copolymer, an alternating block copolymer, a graft copolymer, a star block copolymer, an ionomer, a dendrimer, or the like, or a combination including at least one of the foregoing. Examples of suitable thermoplastic polymers are polyarylene sulfides, polyalkyds, polystyrenes, polyesters, polyamides, polyaramides, polyamideimides, polyarylates, polyarylsulfones, polyethersulfones, polyphenylene sulfides, polysulfones, polyimides, polyetherimides, polytetrafluoroethylenes, polyetherketones, polyether etherketones, polyether ketone ketones, polybenzoxazoles, polyoxadiazoles, polybenzothiazinophenothiazines, polybenzothiazoles, polypyrazinoquinoxalines, polypyromellitimides, polyquinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, polyolefins, polysiloxanes, polybutadienes, polyisoprenes, or the like, or a combination including at least one of the foregoing thermoplastic polymers.

In one exemplary embodiment, the thermoplastic polymer is a polyamide. Exemplary polyamides are nylon 6, and nylon 6,6. In another exemplary embodiment, the thermoplastic polymer is a blend of a polyamide with a polyarylene ether. An exemplary polyarylene ether is polyphenylene ether manufactured by General Electric Advanced Materials. In yet another exemplary embodiment, the thermoplastic polymer is a compatibilized blend of a polyamide with a polyarylene ether.

It is beneficial for the thermoplastic polymers employed in the process to have a melt viscosity of about 1 to about 50 Newton-seconds/square meter (Ns/m²). In one embodiment, the melt viscosity of the thermoplastic polymer is less than or equal to about 30 Ns/m². In another embodiment, the melt viscosity of the thermoplastic polymer is less than or equal to about 10 Ns/m². The melt viscosity of the thermoplastic polymer is dictated by the molecular weight of the polymer.

The thermoplastic polymer may be used in the long fiber composite in an amount of about 20 to about 90 weight percent (wt%), based on the weight of the electrically conducting long fiber composite. In one embodiment, the thermoplastic polymer may be used in the long fiber composite in an amount of about 30 to about 70 weight percent (wt%), based on the weight of the electrically conducting long fiber composite. In another embodiment, the thermoplastic polymer may be used in the long fiber composite in an amount of about 35 to about 65 weight percent (wt%), based on the weight of the electrically conducting long fiber composite. In yet another embodiment, the thermoplastic polymer may be used in the long fiber composite in an amount of about 40 to about 60 weight percent (wt%), based on the weight of the electrically conducting long fiber composite.

The electrically conducting long fiber composite includes, in one embodiment, glass fibers and carbon fibers. The glass fibers may be continuous fibers. The glass fibers may also be referred to as a plurality of continuous filaments. By, the term "continuous fibers" or "plurality of continuous filaments" is meant a fibrous product in which the fibers are sufficiently long to give a roving or tow of sufficient strength, under the processing conditions used, to be hauled through the molten polymer without the frequency of breakage which would render the process unworkable. Examples of suitable fibers are glass fiber, carbon fiber, jute and high modulus synthetic polymer fibers.

In order to have sufficient strength to be hauled through the molten polymer of the impregnation system without breakage, the majority of the continuous fibers of the fibrous product should lie in one direction so that the fibrous product can be drawn through molten polymer with the majority of the continuous fibers aligned. Fibrous products such as mats made up of randomly disposed continuous fibrous are suitable for the process if at least 40% by volume of the fibers are aligned in the direction of draw.

The continuous fibers may be in any form having sufficient mechanical integrity to be pulled through the molten thermoplastic polymer. The continuous fibers generally include bundles of individual fibers or filaments, hereinafter termed "rovings" in which substantially all the fibers are aligned along the length of the bundles. Any number of such rovings may be employed. In the case of commercially available glass rovings each roving may include up to 8000 or more continuous glass filaments. Carbon fiber tapes containing up to 6000 or more carbon fibers may be used. Cloths woven from rovings are also suitable for use in the electrically conducting long fiber composites. The continuous fibers may be provided with a surface sizing. Surface sizings are generally designed to maximize bonding between the fiber and the matrix polymer. Exemplary sizings are γ-aminopropyltriethoxysilane, aminosilane and/or epoxysilane.

It is generally desirable to wet as much of the surface of the fiber as possible with the molten polymer. Thus where a fiber includes a plurality of filaments, the surfaces of the individual filaments making up the fiber are beneficially wetted for optimum effect. Where the filament is treated with a sizing or anchoring agent, the polymer will not be in direct contact with the surface of the fiber or filament because the sizing is interposed between the fiber and the polymer. However, providing that good adhesion between the fiber and the sizing and between the sizing and the polymer are achieved, the product will have a high flexural modulus and the sizing will enhance the properties obtained.

Useful glass fibers can be formed from any type of fiberizable glass composition and include those prepared from fiberizable glass compositions commonly known as "E-glass," "A-glass," "C-glass," "D-glass," "R-glass," "S-glass," as well as E-glass derivatives that are fluorine-free and/or boron-free. Most reinforcement mats have glass fibers formed from E-glass and are included in the conductive compositions of this invention. Such compositions and methods of making glass filaments therefrom are well known to those skilled in the art. Commercially produced glass fibers generally having nominal filament diameters of about 4 to about 35 micrometers may be used in the electrically conducting long fiber composites. In one embodiment, glass fibers generally having nominal filament diameters of about 9 to about 35 micrometers may be used in the electrically conducting long fiber composites.

In one embodiment, the glass fibers include glass strands that have been coated with a sizing agent. In another embodiment, the glass fibers are not coated with a sizing agent. The amount of sizing employed is generally the amount that is sufficient to bind the glass filaments into a continuous strand. When the fibers are coated with a sizing agent, it is generally beneficial for the glass fibers to have a sizing of about 0.1 to about 5 wt%, based on the combined weight of the glass fibers and the sizing.

The glass fibers are, in one embodiment, present in the electrically conducting long fiber composite in an amount of up to about 75 wt%, based on the total weight of the electrically conducting long fiber composite. In one embodiment, the glass fibers are present in the electrically conducting long fiber composite in an amount of about 5 about 60 wt%, based on the total weight of the electrically conducting long fiber composite. In another embodiment, the glass fibers are present in the electrically conducting long fiber composite in an amount of about 10 about 40 wt%, based on the total weight of the electrically conducting long fiber composite.

Various types of electrically conductive carbon fibers may also be used in the electrically conducting long fiber composite. Carbon fibers are generally classified according to their diameter, morphology, and degree of graphitization (morphology and degree of graphitization being interrelated). These characteristics are presently determined by the method used to synthesize the carbon fiber. For example, carbon fibers having diameters down to about 5 micrometers, and graphene ribbons parallel to the fiber axis (in radial, planar, or circumferential arrangements) are produced commercially by pyrolysis of organic precursors in fibrous form, including phenolics, polyacrylonitrile (PAN), or pitch. The carbon fibers may optionally be coated with a sizing agent if desired.

The carbon fibers generally have a diameter of greater than or equal to about 1,000 nanometers (1 micrometer) to about 30 micrometers. In one embodiment, the fibers can have a diameter of about 2 to about 10 micrometers. In another embodiment, the fibers can have a diameter of about 3 to about 8 micrometers.

Carbon fibers are, in one embodiment, used in amounts of up to about 60 wt% of the total weight of the electrically conducting long fiber composite. In one embodiment, carbon fibers are used in amounts of about 1 wt% to about 50 wt%, based on the weight of the electrically conducting long fiber composite. In another embodiment, carbon fibers are used in amounts of about 2 wt% to about 30 wt%, based on the weight of the electrically conducting long fiber composite. In yet another embodiment, carbon fibers are used in amounts of about 3 wt% to about 25 wt%, based on the weight of the electrically conducting long fiber composite.

The glass and the carbon fibers in the long fiber composite can both have long fiber lengths. For purposes of this disclosure, a long fiber length is about 2 millimeters to about 50 millimeters. In one embodiment, a glass long fiber can be mixed with a short carbon fiber. A short fiber length is one that is less than or equal to about 2 millimeters. The use of short carbon fibers in combination with carbon long fibers will permit electrical conductivity to be developed in the long fiber composite at a loading of the carbon fiber that is different from the loading than when a carbon long fiber is employed. By using various combinations of carbon long fibers with short carbon fibers in the electrically conducting long fiber composite, a variety of physical properties can be achieved. In an exemplary embodiment, the carbon fiber is a long fiber.

Other electrically conductive fillers may be added to the long fiber composite to enhance electrical conductivity in the composite. Examples of such electrically conductive fillers are carbon black, carbon nanotubes, single wall carbon nanotubes, multiwall carbon nanotubes, vapor grown carbon fibers, metallic fillers, electrically conducting non-metallic fillers, or the like, or a combination including at least one of the foregoing electrically conductive fillers.

The electrically conductive fillers may be used in loadings of about 0.01 to about 50 wt%, based on the weight of the electrically conducting long fiber composite. In one embodiment, the electrically conductive fillers may be used in amounts of about 0.25 wt% to about 30 wt%, based on the weight of the electrically conducting long fiber composite. In another embodiment, the electrically conductive fillers may be used in amounts of about 0.5 wt% to about 20 wt%, based on the weight of the electrically conducting long fiber composite. In yet another embodiment, the electrically conductive fillers may be used in amounts of about 1 wt% to about 10 wt%, based on the weight of the electrically conducting long fiber composite.

In one embodiment, in one method of manufacturing the electrically conducting long fiber composite, a roving including glass and carbon fibers can be jointly and simultaneously pultruded using a thermoplastic resin as the binder. The thermoplastic resin may be in the form of a melt or in the form of a powder suspension. Thus a single pellet manufactured in the pultrusion process will contain both glass long fibers and carbon long fibers. Alternatively, separate rovings including the glass fibers and the carbon fibers can be pultruded in separate steps. The composite formed after impregnation can be pelletized in a pelletizer.

The respective pellets contain fibers of a length equal to the length of the pellet. The pellets generally have a length of about 2 mm to about 50 mm. An exemplary pellet length is 25 mm. The pellets containing either glass long fibers or carbon long fibers can then be combined in a molding machine to produce an article including the electrically conducting long fiber composite.

In this embodiment, first roving including carbon fibers is pultruded through a first impregnation bath including a first molten thermoplastic polymer. The carbon fibers are impregnated with the first molten thermoplastic polymer to produce a carbon long fiber composite. The carbon long fiber composite is pulled through a first die and then pelletized. Additionally, a second roving including glass fibers is pultruded through a second impregnation bath including a second molten thermoplastic polymer. The glass fibers are impregnated with the second molten thermoplastic polymer to produce a glass long fiber composite. The carbon long fiber composite is pulled through a second die and then pelletized. The glass long fiber composite and the carbon long fiber composite are then molded into an electrically long fiber composite in a molding machine. An exemplary molding machine is an injection-molding machine.

In one embodiment, the first roving and the second roving can be the same or different. When the first roving and the second roving are the same, the carbon fibers and the glass fibers are contained in the same roving. Similarly, the first impregnation bath and the second impregnation bath can be the same or different. In other words, strands of carbon fiber and glass fiber can be impregnated jointly and simultaneously in the same bath. After pelletization, the pellets may be molded in an injection-molding machine to form the electrically conducting long fiber composite.

When the first roving is not the same as the second roving, the first roving and the second roving can be impregnated in separate baths. The carbon long fiber composite and the glass long fiber composite are then pelletized and molded together in a injection-molding machine to form the electrically conducting long fiber composite.

In yet another embodiment, in another method of manufacturing the electrically conducting long fiber composite, the glass fiber can be pultruded separately in a single step to form glass long fiber composite pellets. Similarly, the carbon fiber can be pultruded separately in a single step to form the carbon long fiber composite pellets. However, the molten thermoplastic resin that impregnates the glass long fiber composite and the carbon long fiber composite may contain an electrically conducting filler. Thus the electrically conducting long fiber composite includes additional electrically conducting filler in addition to the carbon long fibers.

The electrically conducting long fiber composite may be molded to have a smooth surface finish. In one embodiment, the electrically conducting long fiber composite may have a Class A surface finish after molding. Articles molded from the electrically conducting long fiber composite may have an electrical specific volume resistivity (SVR) of less than of equal to about 10¹² ohm-cm. In one embodiment, the molded articles may have an electrical volume resistivity of less than of equal to about 10⁸ ohm-cm. In another embodiment, the molded articles may have an electrical volume resistivity of less than of equal to about 10⁵ ohm-cm. The molded articles may also have a surface resistivity of less than or equal to about 10¹² ohm per square centimeter (ohms/square). In one embodiment, the molded articles may also have a surface resistivity of less than or equal to about 10⁸ ohm per square centimeter. In another embodiment, the molded articles may also have a surface resistivity of less than or equal to about 10⁴ ohm per square centimeter. In yet another embodiment, the molded articles may also have a surface resistivity of less than or equal to about 10² ohm per square centimeter.

The electrically conducting long fiber composites also display mechanical properties that are favorable for a large number of high temperature, high strength applications. In one embodiment, the electrically conducting long fiber composite has a notched Izod impact strength of greater than or equal to about 10 kilojoules per square meter (kJ/m²). In another embodiment, the electrically conducting long fiber composites also advantageously have a notched Izod impact strength of greater than or equal to about 15 kJ/m². In yet another embodiment, the electrically conducting long fiber composites also advantageously have a notched Izod impact strength of greater than or equal to about 20 kJ/m². In still another embodiment, the electrically conducting long fiber composites also advantageously have a notched Izod impact strength of greater than or equal to about 30 kJ/m².

The electrically conducting long fiber composites advantageously display a flexural modulus of greater than or equal to about 8 gigapascals (GPa). In one embodiment, the electrically conducting long fiber composites display a flexural modulus of greater than or equal to about 10 GPa.

As noted above, the thermoplastic composition described herein can be advantageously used in the manufacture of a variety of commercial articles. In one embodiment, an exemplary article is a chip tray. They can also be used in other applications where dimensional stability and/or electrical conductivity are beneficial such as automobiles interiors, aircraft, lampshades, or the like. In another embodiment, an exemplary article is an automotive exterior body panel that is to be electrostatically painted.

The following examples, which are meant to be exemplary, not limiting, illustrate compositions and methods for manufacturing the electrically conducting long fiber composite described herein.

### EXAMPLES

### Example 1

This example was conducted to demonstrate the manufacture of a pultruded electrically conducting long fiber composite that contains both glass long fibers and carbon long fibers. Carbon long fibers and glass long fibers that were first pultruded through nylon 6,6 to create a pultruded composite. The pultruded composite contained 25 wt% carbon long fiber and 30 wt% glass long fiber. The pultruded composite was either blended with VERTON RF-7007 EM HS BK9001^{®}, a nylon 6,6 containing only glass long fiber manufactured by General Electric Advanced Materials, or with STAT-KON R-1 HI^{®}, a nylon 6,6 containing carbon black also manufactured by General Electric Advanced Materials to create the long fiber composite. The long fiber composites were in the form of rectangular molded plaques having dimensions of 10 centimeters x 12.5 centimeters. The samples were molded on a 220 Ton Milacron injection molding machine. Table 1 shows the molded compositions and the specific volume resistivity for these samples.

Sample #s 1 through 7 from Table 1 are molded compositions that were derived by molding the pultruded composite with the VERTON RF-7007 EM HS BK9001^{®}, while the Sample #s 8 through 15 in Table 1 were obtained by blending the pultruded composite with STAT-KON R-1 HI^{®}. Samples #s 1 through 15 contain from 3.5 to 11 wt% carbon fiber, based on the total weight of the electrically conducting long fiber composite.

Table 1 shows the surface resistivity of the samples. Surface resistivity measurements were made by using a Keithley resistivity meter. The Table 1 below illustrates that a surprisingly low weight fraction of conductive additive can be used and still retain sufficient conductivity.

**Table 1**

| Sample# | Carbon Fiber (wt%) | Carbon Black (wt%) | Glass (wt%) | Surface Resistivity (Ohm/square) |
|---|---|---|---|---|
| 1 | 3.5 | 0 | 34.2 | 3.10E+04 |
| 2 | 4.4 | 0 | 34 | 1.55E+04 |
| 3 | 5.3 | 0 | 33.8 | 7.76E+03 |
| 4 | 5.7 | 0 | 33.7 | 2.00E+03 |
| 5 | 7 | 0 | 33.4 | 2.90E+03 |
| 6 | 8.8 | 0 | 33 | 4.40E+02 |
| 7 | 11 | 0 | 32.5 | 2.50E+02 |
| 8 | 2.2 | 1.8 | 31 | 4.80E+05 |
| 9 | 2.75 | 2.25 | 30 | 2.80E+04 |
| 10 | 2.2 | 2.7 | 29.25 | 2.30E+04 |
| 11 | 3.3 | 2.7 | 29 | 5.50E+03 |
| 12 | 4.4 | 2.7 | 28.75 | 8.10E+02 |
| 13 | 3.3 | 3.6 | 27.25 | 4.40E+03 |
| 14 | 4.4 | 3.6 | 27 | 4.10E+02 |
| 15 | 5.5 | 4.5 | 25 | 4.40E+02 |

The results from Table 1 show that the Samples #'s 1 to 7 that contain only the carbon long fiber and the glass long fiber have a surface resistivity that is generally equal to or better than Samples # 8 -15 that contain carbon black in addition to the carbon long fiber and the glass long fiber.

### Example 2

This example was undertaken to compare the properties of electrically conductive composites that contain carbon long fibers versus those that contain carbon short fibers. As noted above, carbon long fibers have lengths of greater than or equal to about 2 millimeters, while carbon short fibers have lengths of less than 2 millimeters. The plaques for testing were manufactured by injection molding a blend of a glass long fiber composite with either a carbon long fiber composite or a carbon short fiber composite. The air burnout indicates how much glass fiber is present; the nitrogen burnout indicates how much total fiber is present. Details of the test are shown in the Table 2 below.

**Table 2**

| Properties | Sample # 16 | Sample # 17 |
|---|---|---|
| Carbon fiber form | Long | Short |
| Air burnout, % | 31.74 | 31.6 |
| Nitrogen burnout, % | 44.37 | 43.1 |
| Specific gravity | 1.45 | 1.46 |
| Tensile strength, MPa | 246.1 | 266 |
| Tensile elongation, % | 1.47 | 2.02 |
| Tensile modulus, GPa | 20 | 21.5 |
| Flexural strength, MPa | 381.1 | 372 |
| Flexural modulus, GPa | 17.64 | 16.6 |
| Notch Izod, kJ/m² | 35.3 | 28.4 |

From the Table 2 it may be seen that the comparative sample (Sample # 17) having carbon long fibers displays improved impact and flexural properties over the sample that has carbon short fibers. Thus an electrically conducting long fiber composite including glass long fibers and carbon long fibers produces superior properties over a composite that includes glass long fibers and carbon short fibers.

### Example 3

This example was undertaken to demonstrate that electrically conducting long fiber composites can be manufactured with a variety of different resins. Table 4 shows two compositions, Sample #18 that includes nylon 6,6 and Sample # 19 that includes a compatibilized blend of nylon 6,6 with polyphenylene ether. The compositions and the properties for the respective electrically conducting long fiber composites are shown in the Table 3 below.

**Table 3**

| Composition | Sample # 18 (wt%) | Sample # 19 (wt%) |
|---|---|---|
| Nylon 6,6 | 65 | 32.5 |
| Polyphenylene ether | | 32.5 |
| Carbon long fibers | 10 | 10 |
| Glass long fibers | 25 | 25 |
| Properties | | |
| Specific gravity (g/cc) | 1.35 | 1.32 |
| Tensile strength, MPa | 197.2 | 183.5 |
| Tens elongation, % | 1.52 | 1.41 |
| Tens modulus, GPa | 17.5 | 14.8 |
| Notch Izod, kJ/m² | 21.95 | 21.9 |
| Surface resistivity, ohm/sq | 2.50E+03 | 6.20E+02 |

From the Table 3, it may be seen that electrically conducting long fiber composites can be advantageously manufactured with a variety of thermoplastic resins.

### Example 4

This example demonstrates that the electrically conducting long fiber composites can be manufactured with a wide range of carbon long fiber loadings. The amount of the carbon long fiber is varied from about 3.5 to about 10.5 wt%, based on the total weight of the electrically conducting long fiber composite. The amount of glass long fiber was varied from about 19 to about 48 wt%, based on the total weight of the electrically conducting long fiber composite. These examples also show that the invention is not limited to a narrow range of overall fiber loading. These examples are shown in Table 4.

**Table 4**

| Composition | Sample #20 | Sample #21 | Sample #22 | Sample # 23 | Sample #24 | Sample #25 | Sample #26 | Sample #27 | Sample #28 |
|---|---|---|---|---|---|---|---|---|---|
| Nylon 6,6 wt% | 70.1 | 70.2 | 70.15 | 58.6 | 61.8 | 59.6 | 50.05 | 49.2 | 50 |
| Long Glass Fiber, wt% | 19.34 | 26.28 | 22.81 | 34.36 | 34.68 | 29.84 | 42.91 | 47.28 | 39.44 |
| Long Carbon Fiber, wt% | 10.56 | 3.52 | 7.04 | 7.04 | 3.52 | 10.56 | 7.04 | 3.52 | 10.56 |
| Total Long Fiber, wt% | 29.9 | 29.8 | 29.85 | 41.4 | 38.2 | 40.4 | 49.95 | 50.8 | 50 |
| Properties | | | | | | | | | |
| Nitrogen TGA burnout, % | 30.4 | 30.8 | 32.3 | 44.2 | 41.7 | 40.2 | 52.8 | 52.4 | 52.3 |
| Specific gravity | 1.311 | 1.359 | 1.367 | 1.461 | 1.448 | 1.427 | 1.569 | 1.594 | 1.537 |
| Tensile strength, MPa | 196.57 | 185.13 | 180.11 | 233.75 | 225.87 | 233.34 | 231.56 | 261 | 226.57 |
| Tensile elongation, % | 1.14 | 1.56 | 1.38 | 1.46 | 1.7 | 1.3 | 1.18 | 1.46 | 0.96 |
| Tensile modulus, GPa | 20.4 | 12.9 | 14 | 17.9 | 15.1 | 20.6 | 22.5 | 21.8 | 27.7 |
| Flexural strength, MPa | 297.73 | 288.82 | 286.39 | 355.01 | 324.77 | 348.14 | 367.1 | 378.59 | 375.64 |
| Flexural Modulus, GPa | 12.8 | 11.6 | 11.4 | 15 | 12.7 | 15.9 | 18.5 | 16.4 | 19.4 |
| Izod notched impact, kJ/m² | 16.55 | 15.65 | 19.44 | 33.92 | 32 | 25.63 | 34.39 | 36.55 | 38.99 |
| Surface Resistivity (ohm/sq) | 0.9 | 1.1 | 1.7 | 0.7 | 4.6 | 1.1 | 1.1 | 5.1 | 0.9 |

The results shown in the Table 5 demonstrate that the carbon long fibers produce advantageous mechanical and electrical properties in the electrically conducting long fiber composites. These synergistic properties cannot generally be achieved in other long fiber composites that contain only short carbon fibers, carbon powders such as carbon black, carbon nanotubes or the like. The electrically conducting long fiber composites can be advantageously used in automotive applications such as exterior body panels that are electrostatically painted. They may also be used in integrated circuit trays or the like.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention.

## Claims

1. An electrically conducting long fiber composite comprising:
a thermoplastic resin;
carbon long fibers; and
glass long fibers; wherein the carbon long fibers and the glass long fibers have a length of greater then or equal to 2 millimeters and wherein the electrically conducting long fiber composite upon being molded into an article displays a surface resistivity of less than or equal to 10⁸ ohm per square centimeter and a notched Izod impact strength of greater than or equal to 10 kilojoules per square meter,

2. The composite of Claim 1, wherein the article has a surface resistivity of less than or equal to 10⁴ ohm per square centimeter and a notched Izod impact strength of greater than or equal to 15 kilojoules per square meter.

3. The composite of Claim 1, wherein the article has a specific volume resistivity of less than or equal to 10⁴ ohm per square centimeter and a notched Izod impact strength of greater than or equal to 20 kilojoules per square meter.

4. The composite of Claim 1, wherein the electrically conducting long fiber composite has a Class A surface finish.

5. The composite of Claim 1, wherein the carbon long fibers are produced by the pyrolysis of organic precursors in fibrous form.

6. The composite of Claim 1, wherein the carbon long fibers are derived from pitch, phenolics or polyacrylonitrile.

7. The composite of Claim 1, comprising carbon long fibers in an amount of up to 50 weight percent, based on the weight of the electrically conducting long fiber composite.

8. The composite of Claim 1, wherein the glass long fibers are E-glass, A-glass, C-glass, D-glass, R-glass, S-glass or a combination comprising at least one of the foregoing glass fibers.

9. The composite of Claim 1, comprising glass long fibers in an amount of up to 75 weight percent, based on the weight of the electrically conducting long fiber composite.

10. The composite of Claim 1, wherein the thermoplastic polymer is a polyarylene sulfide, a polyalkyd, a polystyrene, a polyester, a polyamide, a polyaramide, a polyamideimide, a polyarylate, a polyarylsulfone, a polyethersulfone, a polyimide, a polyetherimide, a polytetrafluoroethylene, a polyetherketone, a polyether etherketone, a polyether ketone ketone, a polybenzoxazole, a polyoxadiazole, a polybenzothiazinophenothiazine, a polybenzothiazole, a polypyrazinoquinoxaline, a polypyromellitimide, a polyquinoxaline, a polybenzimidazole, a polyoxindole, a polyoxoisoindoline, a polydioxoisoindoline, a polytriazine, a polypyridazine, a polypiperazine, a polypyridine, a polypiperidine, a polytriazole, a polypyrazole, a polycarborane, a polyoxabicyclononane, a polydibenzofuran, a polyphthalide, a polyacetal, a polyanhydride, a polyvinyl ether, a polyvinyl thioether, a polyvinyl alcohol, a polyvinyl ketone, a polyvinyl halide, a polyvinyl nitrile, a polyvinyl ester, a polysulfonate, a polysulfide, a polysulfonamide, a polyurea, a polyphosphazene, a polysilazane, a polysiloxane, a polyolefin, or a combination comprising at least one of the foregoing thermoplastic polymers.

11. The composite of Claim 1, further comprising at least one electrically conducting filler.

12. The composite of Claim 1, wherein the at least one electrically conducting filler is selected from short carbon fibers having a length of less than 2 millimeters, carbon black, carbon nanotubes, single wall carbon nanotubes, multiwall carbon nanotubes, vapor grown carbon fibers, metallic fillers, electrically conducting non-metallic fillers, or a combination comprising at least one of the foregoing electrically conductive fillers.

13. An article derived from the composite of Claim 1.

14. A method of manufacturing an electrically conducting long fiber composite comprising:
blending a carbon long fiber composite with a glass long fiber composite to produce an electrically conducting long fiber composite; wherein the carbon long fiber composite comprises carbon long fibers having a length of greater than or equal to 2 millimeters disposed in a first thermoplastic resin; and wherein the glass long fiber composite comprises glass long fibers having a length of greater than or equal to 2 millimeters disposed in a second thermoplastic resin.

15. The method of claim 14, further comprising:
pultruding a first roving comprising carbon fibers through a first impregnation bath comprising the first molten thermoplastic polymer;
impregnating the carbon fibers with the first molten thermoplastic polymer to produce the carbon long fiber composite;
pultruding a second roving comprising glass fibers through a second impregnation bath comprising the second molten thermoplastic polymer;
impregnating the glass fibers with the second molten thermoplastic polymer to produce the glass long fiber composite; and
molding the carbon long fiber composite and the glass long fiber composite to form an electrically conducting long fiber composite.

## Patentansprüche

1. Elektrisch leitende Langfaserzusammensetzung (Langfaserverbund), umfassend:
ein thermoplastisches Harz;
Kohlenstofflangfasern; und
Glaslangfasern;
wobei die Kohlenstofflangfasern und die Glaslangfasern eine Länge von größer oder gleich 2 Millimetern besitzen und wobei die elektrisch leitende Langfaserzusammensetzung nach dem Formen zu einem Gegenstand einen Oberflächenwiderstand von kleiner oder gleich 10⁸ Ohm pro Quadratzentimeter und eine Izod-Kerbschlagzähigkeit von größer oder gleich 10 Kilojoule pro Quadratmeter aufweist.

2. Zusammensetzung gemäß Anspruch 1, wobei der Gegenstand einen Oberflächenwiderstand von kleiner oder gleich 10⁴ Ohm pro Quadratzentimeter und eine Izod-Kerbschlagzähigkeit von größer oder gleich 15 Kilojoule pro Quadratmeter aufweist.

3. Zusammensetzung gemäß Anspruch 1, wobei der Gegenstand einen spezifischen Durchgangswiderstand (Volumenwiderstand) von kleiner oder gleich 10⁴ Ohm pro Quadaratzentimeter und eine Izod-Kerbschlagzähigkeit von größer oder gleich 20 Kilojoule pro Quadratmeter aufweist.

4. Zusammensetzung gemäß Anspruch 1, wobei die elektrisch leitende Langfaserzusammensetzung eine Oberflächenbeschaffenheit der Klasse A (Class A Surface Finish) besitzt.

5. Zusammensetzung gemäß Anspruch 1, wobei die Kohlenstofflangfasern durch Pyrolyse von organischen Vorläufersubstanzen in Faserform hergestellt sind.

6. Zusammensetzung gemäß Anspruch 1, wobei die Kohlenstofflangfasern von Pech, phenolischen Polymeren oder Polyacrylnitril abgeleitet sind.

7. Zusammensetzung gemäß Anspruch 1, umfassend Kohlenstofflangfasern in einer Menge von bis zu 50 Gew.-%, bezogen auf das Gewicht der elektrisch leitenden Langfaserzusammensetzung.

8. Zusammensetzung gemäß Anspruch 1, wobei die Glaslangfasern E-Glas, A-Glas, C-Glas, D-Glas, R-Glas, S-Glas oder eine Kombination mit mindestens einer der vorgenannten Glasfasern sind.

9. Zusammensetzung gemäß Anspruch 1, umfassend Glaslangfasern in einer Menge von bis zu 75 Gew.-%, bezogen auf das Gewicht der elektrisch leitenden Langfaserzusammensetzung.

10. Zusammensetzung gemäß Anspruch 1, wobei das thermoplastische Polymer ein Polyarylensulfid, ein Polyalkyd, ein Polystryrol, ein Polyester, ein Polyamid, ein Polyaramid, ein Polyamidimid, ein Polyarylat, ein Polyarylsulfon, ein Polyethersulfon, ein Polyimid, ein Polyetherimid, ein Polytetrafluorethylen, ein Polyetherketon, ein Polyetheretherketon, ein Polyetherketonketon, ein Polybenzoxazol, ein Polyoxadiazol, ein Polybenzothiazinophenothiazin, ein Polybenzothiazol, ein Polypyrazinochinoxalin, ein Polypyromellitimid, ein Polychinoxalin, ein Polybenzimidazol, ein Polyoxindol, ein Polyoxoisoindolin, ein Polydioxoisoindolin, ein Polytriazin, ein Polypyridazin, ein Polypiperazin, ein Polypyridin, ein Polypiperidin, ein Polytriazol, ein Polypyrazol, ein Polycarboran, ein Polyoxabicyclononan, ein Polydibenzofuran, ein Polyphthalid, ein Polyacetal, ein Polyanhydrid, ein Polyvinylether, ein Polywinylthioether, ein Polyvinylalkohol, ein Polyvinylketon, ein Polyvinylhalogenid, ein Polyvinylnitril, ein Polyvinylester, ein Polysulfonat, ein Polysulfid, ein Polysulfonamid, ein Polyharnstoff, ein Polyphosphazen, ein Polysilazan, ein Polysiloxan, ein Polyolefin oder eine Kombination, welche mindestens eines der vorgenannten thermoplastischen Polymere umfaßt, ist.

11. Zusammensetzung gemäß Anspruch 1, weiterhin umfassend mindestens einen elektrisch leitenden Füllstoff.

12. Zusammensetzung gemäß Anspruch 11, wobei der mindestens eine elektrisch leitende Füllstoff ausgewählt ist aus Kohlenstoffkurzfasern mit einer Länge von Weniger als 2 Millimetern, Ruß, Kohlenstoffnanoröhren, einwändigen Kohlenstoffnanoröhren, mehrwändigen Kohlenstoffnanoröhren, Kohlenstoffasern aus Gasphasenabscheidung, metallischen Füllstoffen, elektrisch leitenden nichtmetallischen Füllstoffen oder einer Kombination mit mindestens einem der vorgenannten elektrisch leitenden Füllstoffe.

13. Artikel, erhältlich aus der Zusammensetzung nach Anspruch 1.

14. Verfahren zur Herstellung einer elektrisch leitenden Langfaserzusammensetzung, umfassend:
Mischen einer Kohlenstofflangfaserzusammensetzung mit einer Glaslangfaserzusammensetzung zur Herstellung einer elektrisch leitenden Langfaserzusammensetzung; wobei die Kohlenstofflangfaserzusammensetzung Kohlenstofflangfasern mit einer Länge von größer oder gleich 2 Millimetern, welche in ein erstes thermoplastisches Harz eingebracht sind, umfaßt; und wobei die Glaslangfaserzusammensetzung Glaslangfasern mit einer Länge von größer oder gleich 2 Millimetern, welche in ein zweites thermoplastisches Harz eingebracht sind, umfaßt.

15. Verfahren gemäß Anspruch 14, weiterhin umfassend:
Pultrudieren eines ersten Rovings mit Kohlenstoffasern durch ein erstes Imprägnierbad, welches das erste geschmolzene thermoplastische Polymer aufweist;
Imprägnieren der Kohlenstoffasern mit dem ersten geschmolzenen thermoplastischen Polymer zur Herstellung der Kohlenstofflangfaserzusammensetzung;
Pultrudieren eines zweiten Rovings mit Glasfasern durch ein zweites Imprägnierbad, welches das zweite geschmolzene thermoplastische Polymer aufweist;
Imprägnieren der Glasfasern mit dem zweiten geschmolzenen thermoplastischen Polymer zur Herstellung der Glaslangfaserzusammensetzung; und
Formen der Kohlenstofflangfaserzusammensetzung und der Glaslangfaserzusammensetzung zur Bildung einer elektrisch leitenden Langfaserzusammensetzung (Langfaserverbund).

## Revendications

1. Composite de longues fibres conducteur d'électricité comprenant:
une résine thermoplastique;
de longues fibres de carbone; et
de longues fibres de verre; les longues fibres de carbone et les longues fibres de verre ayant une longueur supérieure ou égale à 2 millimètres et le composite de longues fibres conducteur d'électricité, une fois moulé dans un article, présentant une résistivité de surface inférieure ou égale à 10⁸ ohms par centimètre carré et une résistance au choc entaillé supérieure ou égale à 10 kilojoules par mètre carré.

2. Composite selon la revendication 1, l'article ayant une résistivité de sur-4 face inférieure ou égale à 10 ohms par centimètre carré et une résistance au choc entaillé supérieure ou égale à 15 kilojoules par mètre carré.

3. Composite selon la revendication 1, l'article ayant une résistivité de volume spécifique supérieure ou égale à 10⁴ ohms par centimètre carré et une résistance au choc entaillé supérieure ou égale à 20 kilojoules par mètre carré.

4. Composite selon la revendication 1, le composite de longues fibres conducteur d'électricité ayant une finition de surface de classe A.

5. Composite selon la revendication 1, les longues fibres de carbone étant produites par pyrolyse de précurseurs organiques de forme fibreuse.

6. Composite selon la revendication 1, les longues fibres de carbone étant dérivées de brai, phénol ou polyacrylonitrile.

7. Composite selon la revendication 1, comprenant de longues fibres de carbone dans une quantité allant jusqu'à 50 pour cent en poids en se basant sur le poids du composite de longues fibres conducteur d'électricité.

8. Composite selon la revendication 1, les longues fibres de carbone étant du verre E, du verre A, du verre C, du verre D, du verre R, du verre S ou une combinaison comprenant au moins une des fibres de verre précédentes.

9. Composite selon la revendication 1, comprenant de longues fibres de carbone dans une quantité allant jusqu'à 75 pour cent en poids en se basant sur le poids du composite de longues fibres conducteur d'électricité.

10. Composite selon la revendication 1, le polymère thermoplastique étant un sulfure de polyarylène, un polyalkyde, un polystyrène, un polyester, un polyamide, un polyamideimide, un polyarylate, un poyarylsulfone, un polyéthersulfone, un polyimide, un polyétherimide, un polytétrafluoroéthylène, un polyéthercétone, un polyéther éthercétone, un polyéther cétone cétone, un polybenzoxazole, un polyoxadiazole, un polybenzothiazinophénothiazine, un polybenzothiazole, une polypyrazionquinoxaline, un polypyrommellitimide, une polyquinoxaline, un polybenzimidazole, un polyoxindole, une polyoxoisoindoline, une polydioxoisoindoline, une polytriazine, une polypyridazine, une polypipérazine, une polypyridine, une polypipéridine, un polytriazole, un polypyrazole, un polycarborane, un polyoxabicyclonomane, un polydibenzofurane, un polyphtalide, un polyacétal, un polyanhydride, un polyvinyle éther, un polyvinyle trioéther, un polyvinyle alcool, un polyvinyle cétone, un polyvinyle halogénure, un polyvinyle nitrile, un polyvinyle ester, un polysulfonate, un polysulfure, un polysulfonamide, une polyurée, un polyphosphazène, un polysilazane, une polyoléfine ou une combinaison comprenant au moins un des polymères thermoplastiques précédents.

11. Composite selon la revendication 1, comprenant en outre au moins une matière de charge conductrice d'électricité.

12. Composite selon la revendication 1, l'au moins une matière de charge conductrice d'électricité étant sélectionnée parmi des fibres courtes de carbone ayant une longueur inférieure à 2 millimètres, du noir de carbone, des nanotubes de carbone, des nanotubes de carbone à une paroi, des nanotubes de carbone à parois multiples, des fibres de carbone grossies à la vapeur, des matières de charge métalliques, des matières de charge non métalliques conductrices d'électricité ou une combinaison comprenant au moins une des matières de charge conductrices d'électricité précédentes.

13. Article dérivé du composite de la revendication 1.

14. Procédé de fabrication d'un composite de longues fibres conducteur d'électricité comprenant:
le mélange d'un composite de longues fibres de carbone avec un composite de longues fibres de verre pour produire un composite de longues fibres conducteur d'électricité ; le composite de longues fibres de carbone comprenant de longues fibres de carbone ayant une longueur supérieure ou égale à 2 millimètres disposées dans une première résine thermoplastique ; et le composite de longues fibres de verre comprenant de longues fibres de verre ayant une longueur supérieure ou égale à 2 millimètres disposées dans une seconde résine thermoplastique.

15. Procédé selon la revendication 14, comprenant en outre:
la pultrusion d'une première mèche comprenant des fibres de carbone par un premier bain d'imprégnation contenant le premier polymère thermoplastique moulé;
l'imprégnation des fibres de carbone avec le premier polymère thermoplastique moulé pour produire le composite de longues fibres de carbone;
la pultrusion d'une seconde mèche comprenant des fibres de verre par un second bain d'imprégnation contenant le second polymère thermoplastique moulé;
l'imprégnation des fibres de verre avec le second polymère thermoplastique moulé pour produire le composite de longues fibres de verre; et
le moulage du composite de longues fibres de carbone et du composite de longues fibres de verre pour former un composite de longues fibres conducteur d'électricité.
